# EUROPEAN PATENT SPECIFICATION

(11) **EP 2 382 123 B1**
(45) Date of publication and mention of the grant of the patent: **15.10.2014**
(21) Application number: 08879224.7
(22) Date of filing: 23.12.2008
(51) Int. Cl.: B62D 33/06, B60R 7/04, B62D 35/00

(54) **A VEHICLE CAB WITH A STORAGE COMPARTMENT**
FAHRERHAUS MIT STAUFACH
CABINE DE VÉHICULE À COMPARTIMENT DE RANGEMENT

(43) Date of publication of application: 02.11.2011
(73) Proprietor: Volvo Lastvagnar AB, 405 08 Göteborg (SE)
(72) Inventor: HOBAN, Martin, S-423 38 Torslanda (SE)
(74) Representative: Fröhling, Werner Otto
(86) International application number: PCT/SE2008/000743
(87) International publication number: WO 2010/074612

(56) References cited:
- EP-A1- 0 033 648
- EP-A2- 0 210 370
- DE-A1- 3 619 958
- GB-A- 2 043 555
- GB-A- 2 094 237

## Description

### TECHNICAL FIELD

The present invention relates to a vehicle cab according to claim 1.

### BACKGROUND ART

Road freight vehicles used for long haul often have cabs that are extended rearwards to include sleeping accommodation behind the driver's seat to enable the driver to rest in the cab. However, on today's cabs there is a conflict of interest in the roof area, between aerodynamic requirements for roof shape and accommodation space. A wedge shaped vehicle front is wanted for minimal frontal area in order to reduce fuel consumption. On the other hand, a flat high roof increases the accommodation space for living/resting, front storage and standing space. Therefore, when designing the roof area for a long haul vehicle, truck manufactures have to make a choice between optimising for one of these requirements, or alternatively, doing a compromise between the two.

EP 0033648 shows a vehicle cab roof structure with an airflow deflector which is pivotally connected to the front of the cab. When the vehicle is parked, the accommodation space in the cab can be increased by raising the airflow deflector to provide a compartment above the cab. However, this arrangement does not provide more flexibility for storage space when the vehicle is being driven or increased front storage space when the vehicle is parked.

### DISCLOSURE OF INVENTION

Thus, one object of the present invention is to provide both increased accommodation space in the cab when the vehicle is parked and more flexibility for storage space when the vehicle is driven.

This object is achieved by means of the vehicle cab according to the present invention with a roof that inclines upwards towards the rear of the cab, comprising of a pivotally connected roof section and a driver's seat, which is characterized in that the roof section is pivotally connected to the upper rear end of the cab such that the roof section can be swung about a horizontal pivot point between raised and lowered positions relative to the cab, for providing more living space inside the cab when parked, and that a storage compartment is attached to the inside of the roof section.

According to one embodiment of the invention, the storage compartment is rigidly attached to the pivotally connected roof section substantially above the driver's seat.

Preferably, the front side surface of the storage compartment substantially forms a circular arc with its centre near said roof section pivot point. This feature allows the storage compartment to pass a nearby structure with minimal clearance when the roof section is raised and lowered, so that storage compartment space can be optimized.

According to another embodiment of the invention, the storage compartment is movable along the inside of the roof section between a position towards the rear of the cab and a position substantially above the driver's seat. By having a movable storage compartment attached to the pivotally connected roof section, the accommodation space can easily be enhanced when the vehicle is in parking mode, and an aerodynamically efficient vehicle front is achieved when the cab is transformed into driving mode.

Preferably, the storage compartment is attached to the roof section via two parallel guide rails.

Preferably, means are provided for securing the storage compartment in a rearward position in the cab.

The cab can be provided with an airflow deflector comprising a flexible front part bridging a gap between the deflector and the pivotally connected roof section.

### BRIEF DESCRIPTION OF DRAWINGS

The present invention will be described in a few embodiments with reference to the accompanying drawings in which:
- Fig. 1: illustrates a generalized schematic side view of a truck cab with a driver's seat and accommodation space according to a first embodiment of the invention, and
- Figs. 2: illustrates a generalized schematic side view of a truck cab with a driver's seat and accommodation space according to a second embodiment of the invention.

### MODES FOR CARRYING OUT THE INVENTION

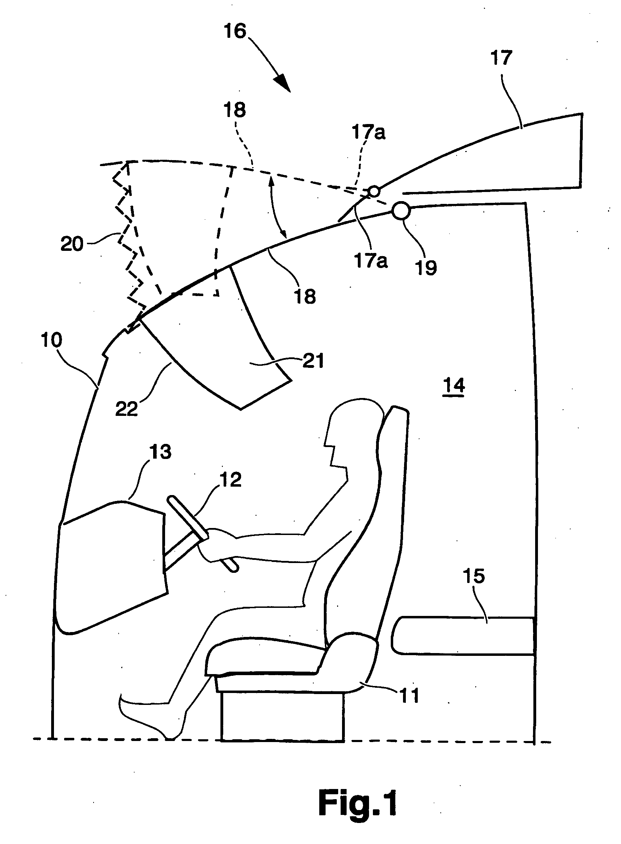

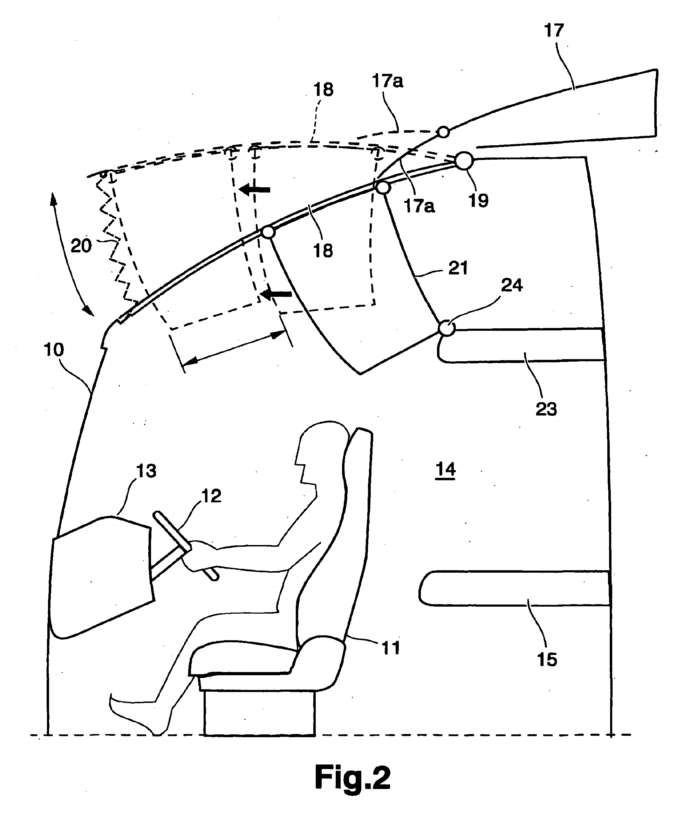

In Fig. 1 and 2 a truck cab for a long-haul freight vehicle is schematically disclosed and forms substantially an integrated self-supporting structure having a front windshield 10, a driver's seat 11 with a steering wheel 12 and a dashboard 13. An accommodation space 14 with a bunk 15 is arranged behind the driver's seat 11.

The cab 10 is provided with an upwardly from the windshield 10 frame towards the rear of the cab inclined roof 16. An airflow deflector 17 located above the rear of the cab continues the sloping line of the roof rearwards. A section 18 of the roof 16 is pivotally connected at 19, so that it can be swung about a horizontal pivot point to a substantially horizontal position relative to the cab, for providing more living space inside the cab when parked. A bellows 20 is arranged between the edges of the roof section 18 and the remaining roof to prevent water from entering the cab and for maintaining the climate inside the cab.

A storage compartment 21 is rigidly attached, for example bolted to the inside of the pivotally connected roof section 18, extending substantially along the entire width of the roof section above the driver's seat 11. The front side surface 22 of the storage compartment forms a circular arc with its centre at the pivot point 19 for the roof section. This makes it possible to position the storage compartment very close to front edge of the roof section 18 without interfering with the nearby part of the roof when the roof section is moved up or down. Thus, the storage space of the storage compartment 21 can be maximized.

The front edge 17a of the airflow deflector 17 is made of a flexible material, for example rubber, so that it can adapt to the movement of the roof section 18. When the vehicle is parked, the roof section 18 can be raised together with the storage compartment 21 to its upper position shown with broken lines in Fig. 1. Now the bottom of the storage compartment is at such a high level that it is possible to move comfortably inside the cab. Electric, pneumatic or hydraulic actuators can be applied for moving the roof section from one position to the other.

In the embodiment according to Fig. 2, the storage compartment 21 is movable along the inside of the roof section 18 between a position towards the rear of the cab and a position substantially above the driver's seat 11. The storage compartment 21 is attached to the roof section 18 via two parallel guide rails (not shown in the figure). An upper bunk 23 in the accommodation space 14 is provided with means 24 for securing the storage compartment 21 in the rearward position when the vehicle is driven. When the vehicle is parked, the storage compartment 21 can be released from the upper bunk 23 and the roof section 18 can be raised to its upper position.

Now the storage compartment can be moved along the rails to any suitable position, for example to a position above the driver's seat as shown with broken lines in Fig. 2.

The embodiment according to Fig. 2 makes it possible to use the roof section 18 as an escape hatch, for example if the vehicle is turned over so it is resting on its side or otherwise is in a position where the cab doors can not be used.

The above described storage compartment 21 is suitable for storing articles that are not so heavy, for example clothing, so that the articles located inside the storage compartment 21 at the top of the cab do not unnecessarily affect the centre of gravity of the vehicle.

The invention is not limited to the above described embodiments. Instead, several modifications are possible within the scope of the following claims.

## Claims

1. A vehicle cab with a roof (16) that inclines upwards towards the rear of the cab comprising a pivotally connected roof section (18) and a driver's seat (11), **characterized in that** the roof section (18) is pivotally connected to the upper rear end of the cab such that the roof section can be swung about a horizontal pivot point (19) between raised and lowered positions relative to the cab, for providing more living space inside the cab when parked, and that a storage compartment (21) is attached to the inside of the roof section (18).

2. A vehicle cab according to claim 1, **characterized in that** the storage compartment (21) is rigidly attached to the pivotally connected roof section (18) substantially above the driver's seat (11).

3. A vehicle cab according to claim 1, **characterized in that** the front side surface (22) of the storage compartment (21) substantially forms a circular arc with its centre near said roof section pivot point (19).

4. A vehicle cab according to claim 1, **characterized in that** the storage compartment (21) is movable along the inside of the roof section (18) between a position towards the rear of the cab and a position substantially above the driver's seat (11).

5. A vehicle cab according to claim 4, **characterized in that** the storage compartment (21) is attached to the roof section (18) via two parallel guide rails.

6. A vehicle cab according to claim 5, **characterized in that** the storage compartment (21) is provided with means (24) for securing it in a rearward position in the cab.

7. A vehicle cab according to any one of claims 1-6, **characterized in that** the cab is provided with an airflow deflector (17) provided with a flexible front part (17a) bridging a gap between the deflector and the roof section (18).

## Patentansprüche

1. Fahrzeugkabine mit einem Dach (16), das sich nach oben in Richtung der Hinterseite der Kabine neigt, die einen gelenkig verbundenen Dachabschnitt (18) und einen Fahrzeugsitz (11) umfasst, **dadurch gekennzeichnet, dass** der Dachabschnitt (18) gelenkig mit dem oberen hinteren Ende der Kabine so verbunden ist, dass der Dachabschnitt um einen horizontalen Schwenkpunkt (19) zwischen einer angehobenen und einer abgesenkten Position bezüglich der Kabine verschwenkt werden kann, um im Parkzustand mehr Wohnraum innerhalb der Kabine zu schaffen, und dass ein Staufach (21) an der Innenseite des Dachabschnitts (18) angebracht ist.

2. Fahrzeugkabine nach Anspruch 1, **dadurch gekennzeichnet, dass** das Staufach (21) fest an dem schwenkbar verbundenen Dachabschnitt (18) im Wesentlichen oberhalb des Fahrersitzes (11) angebracht ist.

3. Fahrzeugkabine nach Anspruch 1, **dadurch gekennzeichnet, dass** die vordere Seitenfläche (22) des Staufachs (21) im Wesentlichen einen kreisförmigen Bogen bildet, dessen Mittelpunkt in der Nähe des Schwenkpunkts (19) des Dachabschnitts liegt.

4. Fahrzeugkabine nach Anspruch 1, **dadurch gekennzeichnet, dass** das Staufach (21) entlang der Innenseite des Dachabschnitts (18) zwischen einer Position in Richtung der Hinterseite der Kabine und einer Position im Wesentlichen oberhalb des Fahrersitzes (11) bewegbar ist.

5. Fahrzeugkabine nach Anspruch 4, **dadurch gekennzeichnet, dass** das Staufach (21) an dem Dachabschnitt (18) über zwei parallele Führungsschienen angebracht ist.

6. Fahrzeugkabine nach Anspruch 5, **dadurch gekennzeichnet, dass** das Staufach (21) mit Einrichtungen (24) versehen ist, um es an einer hinteren Position in der Kabine zu sichern.

7. Fahrzeugkabine nach irgendeinem der Ansprüche 1 bis 6, **dadurch gekennzeichnet, dass** die Kabine mit einem Luftströmungsdeflektor (17) versehen ist, der mit einem flexiblen Vorderteil (17a) versehen ist, der eine Lücke zwischen dem Deflektor und dem Dachabschnitt (18) überbrückt.

## Revendications

1. Cabine de véhicule pourvue d'un toit (16) qui s'incline vers le haut en direction de l'arrière de la cabine comprenant une section de toit à liaison pivotante (18) et un siège du conducteur (11), **caractérisée en ce que** la section de toit (18) est reliée en pivotement à l'extrémité arrière supérieure de la cabine, de sorte que la section de toit puisse osciller autour d'un point de pivotement horizontal (19) entre des positions surélevée et abaissée par rapport à la cabine, pour fournir plus d'espace de vie à l'intérieur de la cabine lors du stationnement, et **en ce qu'**un compartiment de rangement (21) est fixé à l'intérieur de la section de toit (18).

2. Cabine de véhicule selon la revendication 1, **caractérisée en ce que** le compartiment de rangement (21) est fixé de manière rigide à la section de toit à liaison pivotante (18) sensiblement au-dessus du siège du conducteur (11).

3. Cabine de véhicule selon la revendication 1, **caractérisée en ce que** la surface latérale avant (22) du compartiment de rangement (21) forme sensiblement un arc circulaire avec son centre proche dudit point de pivotement de section de toit (19).

4. Cabine de véhicule selon la revendication 1, **caractérisée en ce que** le compartiment de rangement (21) est mobile le long de l'intérieur de la section de toit (18) entre une position vers l'arrière de la cabine et une position sensiblement au-dessus du siège du conducteur (11).

5. Cabine de véhicule selon la revendication 4, **caractérisée en ce que** le compartiment de rangement (21) est fixé à la section de toit (18) par l'intermédiaire de deux rails de guidage parallèles.

6. Cabine de véhicule selon la revendication 5, **caractérisée en ce que** le compartiment de rangement (21) est pourvu d'un moyen (24) pour le fixer dans une position arrière dans la cabine.

7. Cabine de véhicule selon l'une quelconque des revendications 1 à 6, **caractérisée en ce que** la cabine est pourvue d'un déflecteur de flux d'air (17) pourvu d'une partie avant souple (17a) couvrant un espace entre le déflecteur et la section de toit (18).
